# FASCICULE DE BREVET EUROPEEN

(11) **EP 2 808 763 B1**
(45) Date de publication et mention de la délivrance du brevet: **01.08.2018**
(21) Numéro de dépôt: 14001654.4
(22) Date de dépôt: 12.05.2014
(51) Int. Cl.: G06F 3/033, B64C 13/04, B64D 43/00, G06F 3/039, B60K 35/00, B60K 37/06

(54) **Interface homme-machine avec moyen de désignation et repose-bras, et véhicule**
Mensch-Maschinen-Schnittstelle mit Bestimmungseinrichtung und Armstütze, und Fahrzeug
Human-machine interface with designating means and armrest, and vehicle

(30) Priorité: 28.05.2013 FR 1301208
(43) Date de publication de la demande: 03.12.2014
(73) Titulaire: Airbus Helicopters, 13725 Marignane Cedex (FR)
(72) Inventeur: Kerdreux, Christelle, F-13880 Velaux (FR); Colaprisco, Marc, F-13180 Gignac la Nerthe (FR); Bardet, David, F-13300 Salon de Provence (FR)
(74) Mandataire: GPI & Associés

(56) Documents cités:
- DE-A1-102005 036 624
- DE-A1-102009 008 728
- DE-B3-102005 033 028
- FR-A3- 2 889 125
- US-A1- 2012 234 985
- US-B1- 6 476 794

## Description

La présente invention concerne d'une part une interface homme-machine incluant un moyen de désignation et un repose-bras, et d'autre part un véhicule comprenant cette interface.

L'invention se situe plus particulièrement dans le domaine technique des interfaces homme-machine d'un giravion, et notamment des dispositifs de désignation ergonomiques couplés à des écrans de pilotage multifonction.

L'utilisation d'écrans multifonction tend à se répandre dans l'industrie aéronautique. Une interface homme-machine permet à un utilisateur de déplacer des pointeurs sur un tel écran pour activer des fonctions par exemple. Un tel pointeur est usuellement dénommé « curseur ».

L'interface homme-machine comporte alors un moyen dénommé « moyen de désignation » par commodité pour déplacer le curseur. Ce moyen de désignation peut comprendre un clavier ou encore un instrument dénommé « souris » par exemple. Une souris peut comprendre un support sur lequel repose la paume d'une main, le déplacement de la souris générant le déplacement d'un pointeur par exemple.

On connaît aussi un moyen de désignation muni d'une zone tactile. Un utilisateur déplace un doigt sur la zone tactile pour déplacer un pointeur sur un écran. Un tel moyen de désignation est connu sous la désignation « trackpad » en langue anglaise.

On connait aussi un moyen de désignation mettant en oeuvre une « bille » connu sous la désignation « trackball » en langue anglaise.

Cependant, l'intégration et l'utilisation d'un écran de ce type peut être délicat dans un aéronef. En effet, les vibrations ou les mouvements rencontrés dans un cockpit d'aéronef et plus particulièrement d'un giravion rendent difficiles la manipulation d'une interface homme-machine de manière précise.

De plus, l'écran multifonction peut aussi être tactile. Un utilisateur peut alors éprouver des difficultés pour déplacer sa main de manière précise entre une interface de type souris par exemple et l'écran tactile.

Le document US 6429852 présente une interface homme-machine de type souris. Cette interface comprend un support pour supporter la main d'un utilisateur, le support étant muni de moyens de contrôle pouvant être manoeuvrés par les doigts de cette main.

Le document US 5161760 propose un dispositif comprenant une paire d'organes de support mobile par rapport à un clavier. Chaque organe de support comporte un support de poignée et un support de paume. De plus chaque organe de support est articulé à un socle accueillant le clavier.

Le document US 5342005 décrit un support d'avant bras.

Le document EP 0721629 présente une interface homme-machine comprenant d'une part un support de paume sur lequel peut reposer la paume d'une main, et d'autre part une zone tactile.

Le document US 6476794 présente une roue codeuse intégrée dans un moyen de repos de la main d'un individu. Le document US 6476794 décrit une interface homme-machine pour véhicule automobile comprenant une roue codeuse intégrée dans un repose-bras ou repose-poignet de forme ergonomique -convexe-; l'interface est utilisée pour la sélection sur un écran, et comporte d'autres moyens d'entrée, accessibles quand les doigts sont en extension, ainsi qu'un bouton poussoir pour le pouce.

Les documents FR 2 889 125 et DE 10 2009 008728 présentent une roue codeuse solidaire d'un repose bras. Le documents FR 2 889 125 concerne une interface homme-machine pour véhicule automobile comprenant une roue codeuse intégrée dans la face avant d'un repose-bras; l'interface est utilisée pour la sélection sur un écran, et comporte d'autres moyens d'entrée. Le document DE 10 2009 008728 décrit une interface homme-machine pour véhicule automobile comprenant une roue codeuse intégrée dans un repose-bras de forme ergonomique; l'interface est utilisée pour la navigation, impliquant donc la sélection sur un écran, et comporte d'autres moyens d'entrée, accessibles quand un capot est ouvert.

Le document DE 10 2005 036624 décrit un accoudoir équipé d'un organe télescopique pour l'entrée de paramètres. Le document DE 10 2005 036624 montre une interface homme-machine pour véhicule automobile comprenant des moyens d'entrée intégrés de façon télescopique dans la face avant supérieure d'un repose-bras; l'interface est utilisée pour l'entrée de paramètres, qui peuvent être affichés sur un écran intégré à ces moyens; l'interface comporte d'autres moyens d'entrée, par exemple sensibles à la pression des doigts.

Le document DE 10 2005 033028 décrit un accoudoir portant un panneau mobile. Le document DE 10 2005 033028 décrit une interface homme-machine pour véhicule automobile comprenant un panneau d'entrée fixé de façon mobile à un repose-bras; l'interface peut inclure un écran ou un écran tactile, ainsi que d'autres moyens d'entrée, par exemple sensibles à la pression des doigts.

Le document US 2012/234985 présente un mini manche porté par un support, ce support pouvant porter un repose bras. Le document US 2012/234985 décrit un joystick de contrôle des directions d'un aéronefs, notamment d'un giravion ou hélicoptère; ce joystick est articulé sur un support qui peut être incorporé dans un repose-bras d'un siège.

La présente invention a alors pour objet de proposer une interface homme-machine innovante notamment adaptée à une utilisation dans un environnement sujet à des vibrations, plus particulièrement dans un véhicule et notamment un aéronef.

Selon l'invention, une interface homme-machine d'un véhicule est munie d'un moyen de désignation pour contrôler un curseur sur au moins un écran de visualisation.

Cette interface homme-machine comporte un socle pourvu de moyens de fixation à une console du véhicule.

De plus, l'interface homme-machine inclut un support s'étendant en élévation à partir du socle jusqu'à une face supérieure, le support s'étendant transversalement entre deux faces latérales et longitudinalement d'une face arrière vers une face avant.

Une encoche est ménagée dans au moins une face latérale du support selon une direction en élévation, l'encoche étant conformée à la forme d'un pouce d'un utilisateur.

En outre, la face supérieure comprend un repose-bras ergonomique muni de deux bords relevés s'étendant symétriquement de part et d'autre d'un axe de symétrie longitudinal du repose-bras, les deux bords étant disposés de part et d'autre transversalement d'une zone repose-bras s'étendant de la face arrière vers la face avant, ledit repose-bras présentant une section en forme de C et étant allongé longitudinalement pour être conformé à un avant-bras d'un utilisateur.

De plus, la face avant s'étend en élévation à partir du socle d'une portion inférieure sur laquelle est agencé le moyen de désignation vers une portion supérieure atteignant la face supérieure, la portion supérieure étant bombée pour supporter une paume d'un utilisateur.

La portion supérieure représente alors un repose-paume localisé dans le prolongement du repose-bras. De même, l'encoche fait suite au repose-bras selon une direction allant de la face arrière vers la face avant.

En outre, l'interface homme-machine peut comprendre un dispositif électronique usuel du moyen de désignation pour générer un signal de contrôle à destination de l'écran de visualisation. Ce dispositif électronique peut être agencé dans le socle pour être aisément relié à l'écran de visualisation.

Ainsi, l'interface homme-machine peut être fixée à une console d'un véhicule via les moyens de fixation. Ces moyens de fixation sont des moyens usuels, tels que des orifices coopérant avec des vis ou équivalents par exemple.

Un utilisateur place ainsi un avant-bras sur le repose-bras. Les bords relevés maintiennent l'avant-bras en position transversalement.

De plus, l'utilisateur pose la paume de sa main sur le repose-paume, le pouce de cette main étant disposé dans l'encoche.

Même si l'aéronef subit de fortes vibrations ou des déplacements brusques, la main de l'utilisateur est maintenue dans la position adéquate par rapport au moyen de désignation. L'utilisateur peut alors manoeuvrer précisément ce moyen de désignation avec ses doigts, et avec son index par exemple.

La synergie du repose-bras, du repose-paume et de la position du moyen de désignation permet donc d'obtenir une interface homme-machine apte à contrôler un curseur sur un écran de visualisation, cette interface demeurant fiable et efficace en présence de vibrations notamment.

Un bouton peut par ailleurs être disposé dans l'encoche pour être manoeuvré par le pouce.

L'interface homme-machine peut de plus comporter une ou plusieurs des caractéristiques additionnelles qui suivent.

Ainsi, l'interface homme-machine peut comporter un écran de visualisation présentant notamment le curseur contrôlé par le moyen de désignation.

Cet écran de visualisation peut être un écran tactile. Par suite, un utilisateur peut agir sur les informations affichées soit par une manoeuvre du moyen de désignation soit par une action sur l'écran de visualisation.

L'invention permet de passer d'un premier mode de fonctionnement sollicitant le moyen de désignation à un deuxième mode de fonctionnement sollicitant l'écran de visualisation aisément.

En effet, la synergie du repose-bras, de l'encoche ergonomique et du repose-paume permet un déplacement précis et aisé de la main d'un utilisateur du moyen de désignation vers l'écran de visualisation et inversement.

Par exemple, après avoir sollicité directement l'écran de visualisation, l'utilisateur peut aisément replacer sa main dans la position idoine sur le support pour manoeuvrer le moyen de désignation.

En outre, l'écran de visualisation peut être placé dans le prolongement de l'axe de symétrie longitudinal du repose-bras. Dès lors, l'utilisateur peut aisément déplacer sa main vers l'écran de visualisation.

Le déplacement de la main de l'utilisateur vers la position requise est simple, et peut éventuellement être automatique sans nécessiter une attention soutenue d'un pilote. Cette caractéristique est d'autant plus intéressante que la charge de travail d'un pilote d'un véhicule est importante.

En outre, le support reposant sur une face d'accueil du socle, la face d'accueil étant contenue dans un plan horizontal, l'écran de visualisation est contenu dans un plan de visualisation présentant une inclinaison compris entre 20 degrés et 40 degrés par rapport au plan horizontal.

Ce positionnement minimise de manière surprenante les efforts à fournir par un utilisateur pour solliciter un écran de visualisation après avoir manoeuvré un moyen de désignation.

Par ailleurs, le support reposant sur une face d'accueil du socle, la face d'accueil étant contenue dans un plan horizontal, la portion inférieure peut être perpendiculaire au plan horizontal.

Cette position optimise le positionnement de la main sur le support en plaçant cette main dans une position naturelle pour un homme. La manoeuvre du moyen de désignation est ainsi facilitée. De plus, cette position confortable tend à minimiser les effets des vibrations du véhicule sur la manoeuvre du moyen de désignation.

Ce moyen de désignation peut comporter au moins un des moyens suivant : une zone tactile de type « trackpad », une bille mobile de type « trackball », une molette, ou encore un moyen de sélection pouvant être activé par une pression d'un doigt d'un utilisateur tel qu'un bouton.

L'invention vise de plus un véhicule muni d'une console. Dès lors, le véhicule comporte au moins une interface homme-machine du type décrit précédemment, le socle étant fixé à la console. De même, un écran de visualisation peut être fixé à cette console.

Un tel véhicule peut plus particulièrement être un aéronef.

L'invention et ses avantages apparaîtront avec plus de détails dans le cadre de la description qui suit avec des exemples de réalisation donnés à titre illustratif en référence aux figures annexées qui représentent :
- la figure 1, une vue d'une interface homme-machine selon l'invention,
- la figure 2, une vue d'une interface homme-machine selon l'invention fixée à une console 2 d'un véhicule 1,
- la figure 3, une vue d'une interface homme-machine présentant un utilisateur agissant sur le moyen de désignation, et
- la figure 4, une vue d'une interface homme-machine présentant un utilisateur agissant sur un écran de visualisation.

Les éléments présents dans plusieurs figures distinctes sont affectés d'une seule et même référence.

On note que trois directions X, Y et Z orthogonales les unes par rapport aux autres sont représentées sur certaines figures.

La première direction X est dite longitudinale. Le terme « longitudinal » est relatif à toute direction parallèle à la première direction X.

La deuxième direction Y est dite transversale. Le terme « transversal » est relatif à toute direction parallèle à la deuxième direction Y.

Enfin, la troisième direction Z est dite en élévation. L'expression « en élévation » est relative à toute direction parallèle à la troisième direction Z.

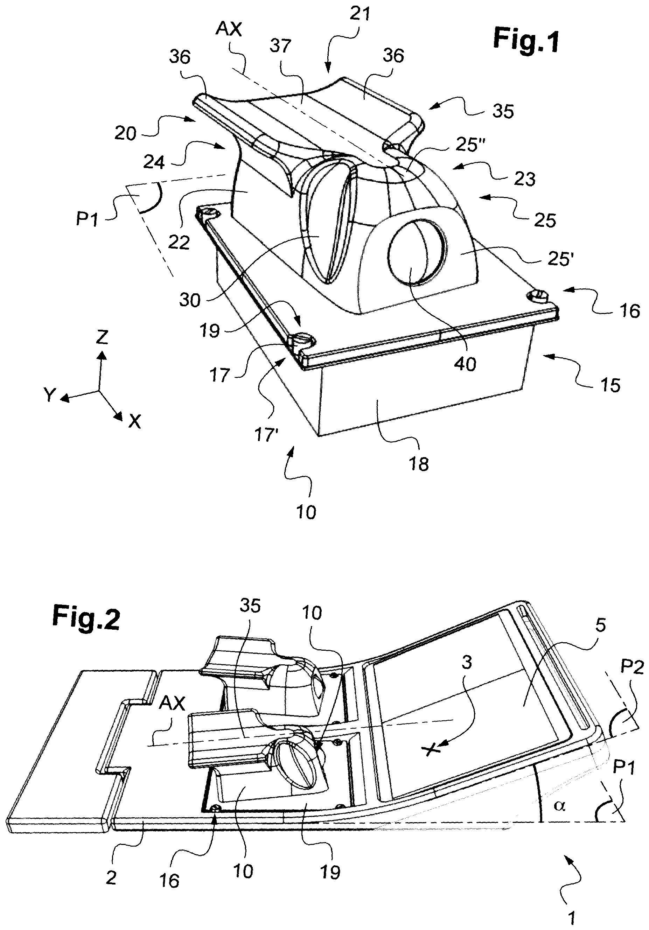

La figure 1 présente une interface 10 homme-machine selon l'invention.

Cette interface 10 homme-machine comprend un socle 15 portant un support 20.

Ce socle 15 peut comprendre une boîte 18 munie d'une face d'accueil 19. La face d'accueil 19 saille en périphérie de la boîte 18 de manière à présenter un rebord pouvant être fixé à une console par des moyens de fixation 16. Par exemple, ces moyens de fixation 16 incluent des orifices 17' traversant le socle 15, et des vis 17 aptes à traverser ces orifices 17'.

La boîte peut être creuse pour accueillir en son sein un dispositif électronique, tel qu'un dispositif électronique d'un moyen de détermination 40 de l'interface homme-machine 10.

Le support 20 s'étend à partir de la face d'accueil 19 selon une direction en élévation Z jusqu'à une face supérieure 21. De plus, le support 20 s'étend transversalement entre une face latérale gauche 23 et une face latérale droite 22, et longitudinalement d'une face arrière 24 vers une face avant 25.

Le support a ainsi globalement une forme de parallélépipède rectangle.

La face supérieure 21 du support 20 comprend un repose-bras 35 sur lequel un individu peut appuyer son avant-bras.

Ce repose-bras 35 est muni de deux bords 36 disposés symétriquement et transversalement de part et d'autre d'un axe AX de symétrie du repose-bras. Cet axe AX de symétrie s'étend selon une direction longitudinale.

Par suite, le repose-bras 35 comporte une zone 37 dite « zone repose-bras » s'étendant le long de l'axe AX de symétrie entre les bords 36.

La zone 37 repose-bras est relativement plane alors que les bords 36 sont relevés pour s'éloigner en élévation du plan contenant la zone 37 repose-bras. Ces caractéristiques confèrent au repose-bras une forme de C allongée.

Le repose-bras 35 est alors conformé à la forme d'un avant-bras pour permettre à un individu de caler son avant-bras dans le support.

En outre, le support 20 comporte au moins une encoche 30 d'accueil d'un pouce d'un utilisateur. L'encoche 30 est située en avant du repose-bras 35, selon une direction allant de la face arrière vers la face avant.

Chaque encoche 30 est ménagée dans une face latérale et s'étend selon une direction en élévation du socle vers la face supérieure. Le support 20 peut alors comporter une unique encoche ménagée dans une face latérale. Selon une autre variante, le support 20 comporte deux encoches ménagées respectivement dans les faces latérales gauche et droite de manière à être symétrique afin de pouvoir être installé aussi bien à la gauche qu'à la droite d'un siège.

De plus, le support 20 comporte un repose-paume et un moyen de désignation 40 en avant du repose-bras 35, selon une direction allant de la face arrière vers la face avant.

Plus précisément, la face avant 25 est munie selon une direction en élévation d'une portion inférieure 25' reposant sur la face d'accueil 19, puis d'une portion supérieure 25".

Dès lors, la portion inférieure peut être orthogonale à un plan horizontal P1 contenant la face d'accueil 19. Le moyen de désignation 40 est alors agencé sur cette portion inférieure 25'. En fonction de la nature du moyen de désignation, la portion inférieure peut présenter une autre angulation par rapport au plan horizontal P1.

Le moyen de désignation peut comprendre une bille mobile selon l'exemple représenté. A titre de variante ou en complémente, le moyen de désignation peut comporter une zone tactile, une molette ou encore un moyen de sélection de type bouton par exemple.

Ce moyen de désignation est relié à un dispositif électronique agencé au sein du support ou du socle. Il est à noter que le support peut par exemple être pivotant ou encore peut comprendre des portions pivotantes pour permettre l'accès au dispositif électronique.

Suite à une manoeuvre du moyen de désignation par un individu, le dispositif électronique génère un ordre transmis à un écran de visualisation pour déplacer un curseur par exemple.

La figure 2 présente une interface homme-machine 10 selon l'invention, fixée à une console 2 d'un véhicule 1. Ce véhicule est ainsi pourvu d'au moins une interface 10 homme-machine pour commander un curseur 3 d'au moins un écran de visualisation 5.

Ainsi, le socle 15 de chaque interface est logé dans un logement de la console 2, puis fixé à cette console par des moyens de fixation.

De même, l'écran de visualisation 5 est fixé à la console 2, dans le prolongement de l'axe AX de symétrie du repose-bras 35 associé. Cet écran de visualisation 5 est favorablement contenu dans un plan de visualisation P2 présentant une inclinaison α compris entre 20 degrés et 40 degrés par rapport au plan horizontal P1 défini par la face d'accueil 19.

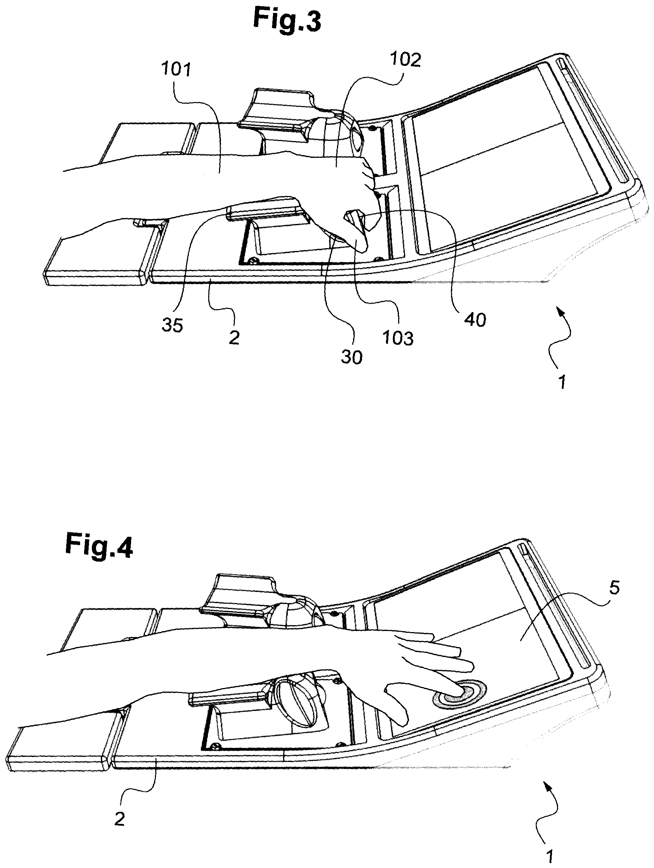

En référence à la figure 3, un individu positionne alors son avant-bras 101 sur le repose-bras 35. Pour actionner le moyen de désignation 40, l'individu appuie la paume 102 de sa main sur la portion supérieure 25" de la face avant 25, et dispose son pouce dans l'encoche 30. Cet individu peut alors aisément manoeuvrer le moyen de désignation avec les autres doigts de sa main.

En référence à la figure 4 et lorsque l'écran de visualisation 5 est un écran tactile par exemple, l'individu peut étendre sa main pour actionner cet écran de visualisation.

Naturellement, la présente invention est sujette à de nombreuses variations quant à sa mise en oeuvre. Bien que plusieurs modes de réalisation aient été décrits, on comprend bien qu'il n'est pas concevable d'identifier de manière exhaustive tous les modes possibles. Il est bien sûr envisageable de remplacer un moyen décrit par un moyen équivalent sans sortir du cadre de la présente invention, qui est défini par les revendications.

## Revendications

1. Interface (10) homme-machine d'un véhicule (1) munie d'un moyen de désignation (40) pour contrôler un curseur (3) sur au moins un écran de visualisation (5), ladite interface (10) homme-machine comportant:
- un socle (15) pourvu de moyens de fixation (16) à une console (2) dudit véhicule (1),
- un support (20) s'étendant en élévation à partir dudit socle (15) jusqu'à une face supérieure, ledit support (20) s'étendant transversalement entre deux faces latérales (22, 23) et longitudinalement d'une face arrière (24) vers une face avant (25), une encoche (30) étant ménagée dans au moins une face latérale (22) dudit support (20) selon une direction en élévation (Z) et étant conformée à la forme d'un pouce d'un utilisateur , ladite face supérieure (21) ayant un repose-bras (35) ergonomique muni de deux bords (36) relevés s'étendant symétriquement de part et d'autre d'un axe (AX) de symétrie longitudinal du repose-bras (35), lesdits deux bords (36) étant disposés de part et d'autre transversalement d'une zone (37) repose-bras s'étendant de la face arrière (24) vers la face avant (25), ledit repose-bras (35) présentant une section en forme de C et étant allongé longitudinalement pour être conformé à un avant-bras d'un utilisateur, ladite face avant (25) s'étendant en élévation à partir du socle (15) d'une portion inférieure (25') sur laquelle est agencé le moyen de désignation (40) vers une portion supérieure (25") atteignant la face supérieure (21), la portion supérieure (25") étant bombée pour supporter une paume d'un utilisateur.

2. Interface homme-machine selon la revendication 1, comportant ledit écran de visualisation (5), ledit écran de visualisation (5) étant placé dans le prolongement dudit axe de symétrie longitudinal du repose-bras (35).

3. Interface homme-machine selon l'une quelconque des revendications 1 à 2, dans laquelle ledit support (20) reposant sur une face d'accueil (19) dudit socle (15), ladite face d'accueil (19) étant contenue dans un plan horizontal (P1), ledit écran de visualisation (5) est contenu dans un plan de visualisation (P2) présentant une inclinaison comprise entre 20 degrés et 40 degrés par rapport au plan horizontal (P1).

4. Interface homme-machine selon l'une quelconque des revendications 1 à 3,
où, ledit support (20) reposant sur une face d'accueil (19) dudit socle (15), ladite face d'accueil (19) étant contenue dans un plan horizontal (P1), ladite portion inférieure (25') est perpendiculaire audit plan horizontal (P1).

5. Interface homme-machine selon l'une quelconque des revendications 1 à 4,
où ledit écran de visualisation (5) est un écran tactile.

6. Interface homme-machine selon l'une quelconque des revendications 1 à 5,
où ledit moyen de désignation (40) comporte une zone tactile de type « trackpad ».

7. Interface homme-machine selon l'une quelconque des revendications 1 à 6,
où ledit moyen de désignation (40) comporte une bille mobile.

8. Interface homme-machine selon l'une quelconque des revendications 1 à 7,
où ledit moyen de désignation (40) comporte une molette.

9. Interface homme-machine selon l'une quelconque des revendications 1 à 8,
où ledit moyen de désignation (40) comporte un moyen de sélection pouvant être activé par une pression d'un doigt d'un utilisateur.

10. Véhicule (1) muni d'une console (2),
**caractérisé en ce que** ledit véhicule (1) comporte au moins une interface (10) homme-machine selon l'une quelconque des revendications 1 à 9, ledit socle (15) étant fixé à ladite console (2).

## Patentansprüche

1. Mensch-Maschine-Schnittstelle (10) eines Fahrzeugs (1) mit einem Eingabemittel (40) zum Steuern eines Mauszeigers (3) auf mindestens einem Bildschirm (5), wobei die Mensch-Maschine-Schnittstelle (10) aufweist:
- einen Sockel (15) mit Mitteln (16) zur Befestigung an einer Konsole (2) des Fahrzeugs (1),
- einer Stütze (20), die sich in Höhenrichtung ausgehend von dem Sockel (15) bis zu einer oberen Fläche erstreckt, wobei die Stütze (20) sich in Querrichtung zwischen zwei Seitenflächen (22, 23) und in Längsrichtung von einer hinteren Seite (24) bis zu einer vorderen Seite (25) erstreckt, wobei eine Einkerbung (30) in mindestens eine Seitenfläche (22) der Stütze (20) entlang einer Höhenrichtung (Z) ausgebildet ist und an die Form eines Daumens eines Anwenders angepasst ist, wobei die obere Fläche (21) eine ergonomische Armauflage (35) aufweist mit zwei erhöhten Rändern (36), die sich symmetrisch zu beiden Seiten einer Längssymmetrieachse der Armauflage (35) erstrecken, wobei die beiden Ränder (36) in Querrichtung zu beiden Seiten eines Armauflagebereichs (37) angeordnet sind, der sich von der hinteren Seite (24) zu der vorderen Seite (25) erstreckt, wobei die Armauflage (35) einen C-förmigen Querschnitt aufweist und in Längsrichtung verlängert ist, um an einen Unterarm eines Anwenders angepasst zu sein, wobei die vordere Fläche (25) sich in die Höhe ausgehend von dem Sockel (15) von einem unteren Abschnitt (25'), in dem das Eingabemittel (40) angeordnet ist, bis zu einem oberen Abschnitt (25") erstreckt, der die obere Fläche (21) erreicht, wobei der obere Abschnitt (25") gewölbt ist, um eine Handfläche eines Anwenders zu unterstützen.

2. Mensch-Maschine-Schnittstelle nach Anspruch 1,
die den Bildschirm (5) aufweist, wobei der Bildschirm (5) in der Verlängerung der Längssymmetrieachse der Armauflage (35) angeordnet ist.

3. Mensch-Maschine-Schnittstelle nach einem der Ansprüche 1 bis 2, bei der die Stütze (20) auf einer Aufnahmefläche (19) des Sockels (15) ruht, wobei die Aufnahmefläche (19) in einer horizontalen Ebene (P1) liegt, wobei der Bildschirm (25) in einer Anzeigeebene (P2) liegt, die eine Neigung zwischen 20 und 40 Grad relativ zu der horizontalen Ebene (P1) aufweist.

4. Mensch-Maschine-Schnittstelle nach einem der Ansprüche 1 bis 3, wobei, wenn die Stütze (20) auf einer Aufnahmefläche (19) des Sockels (15) ruht, die Aufnahmefläche (19) in einer horizontalen Ebene (P1) liegt, wobei der untere Abschnitt (25') senkrecht zu der horizontale Ebene (P1) ist.

5. Mensch-Maschine-Schnittstelle nach einem der Ansprüche 1 bis 4, wobei der Bildschirm (5) ein berührungsempfindlicher Bildschirm ist.

6. Mensch-Maschine-Schnittstelle nach einem der Ansprüche 1 bis 5, wobei das Eingabemittel (40) einen berührungsempfindlichen Bereich vom Typ "Trackpad" aufweist.

7. Mensch-Maschine-Schnittstelle nach einem der Ansprüche 1 bis 6, wobei das Eingabemittel (40) eine Rollkugel aufweist.

8. Mensch-Maschine-Schnittstelle nach einem der Ansprüche 1 bis 7, wobei das Eingabemittel (40) ein Scrollrad aufweist.

9. Mensch-Maschine-Schnittstelle nach einem der Ansprüche 1 bis 8, wobei das Eingabemittel (40) ein Auswahlmittel aufweist, das durch das Drücken eines Fingers des Anwenders aktiviert werden kann.

10. Fahrzeug (1) mit einer Konsole (2),
**dadurch gekennzeichnet, dass** das Fahrzeug (1) mindestens eine Mensch-Maschine-Schnittstelle (10) nach einem der Ansprüche 1 bis 9 aufweist, wobei der Sockel (15) an der Konsole (2) befestigt ist.

## Claims

1. Human-machine interface (10) of a vehicle (1) provided with a selection means (40) for controlling a cursor (3) on at least one visualisation screen (5), said
human-machine interface (10) comprising:
- a base (15) equipped with means (16) for attachment to a console (2) of said vehicle (1),
- a bracket (20) extending in elevation from said base (15) as far as an upper face, said bracket (20) extending transversally between two side faces (22, 23) and longitudinally from a rear face (24) to a front face (25), a notch (30) being formed in at least one side face (22) of said bracket (20) in an elevation direction (Z) and being shaped in the form of a user's thumb, said upper face (21) having an ergonomic arm rest (35) provided with two raised edges (36) extending symmetrically on either side of a longitudinal axis (AX) of symmetry of the arm rest (35), said two edges (36) being arranged transversally on either side of an arm rest area (37) extending from the rear face (24) to the front face (25), said arm rest (35) having a C-shaped cross section and being longitudinally elongate in order to be shaped to a user's forearm, said front face (25) extending in elevation from the base (15) from a lower portion (25') on which the selection means (40) is arranged to an upper portion (25"), so as to reach the upper face (21), the upper face (25") being rounded in order to bear a user's palm.

2. Human-machine interface according to claim 1 comprising said visualisation screen (5), said visualisation screen (5) being placed in the extension of said longitudinal axis of symmetry of the arm rest (35).

3. Human-machine interface according to either claim 1 or claim 2, wherein, with said bracket (20) resting on a mounting surface (19) of said base (15) and said mounting surface (19) being contained in a horizontal plane (P1), said visualisation screen (5) is contained in a visualisation plane (P2) having an incline of between 20 degrees and 40 degrees with respect to the horizontal plane (P1).

4. Human-machine interface according to any of claims 1 to 3, wherein, with said bracket (20) resting on a mounting surface (19) of said base (15) and said mounting surface (19) being contained in a horizontal plane (P1), said lower portion (25') is perpendicular to said horizontal plane (P1).

5. Human-machine interface according to any of claims 1 to 4, wherein said visualisation screen (5) is a touch screen.

6. Human-machine interface according to any of claims 1 to 5, wherein said selection means (40) comprises a trackpad-type touch area.

7. Human-machine interface according to any of claims 1 to 6, wherein said selection means (40) comprises a movable ball.

8. Human-machine interface according to any of claims 1 to 7, wherein said selection means (40) comprises a thumbwheel.

9. Human-machine interface according to any of claims 1 to 8, wherein said selection means (40) comprises a selection means capable of being activated by pressure from a user's finger.

10. Vehicle (1) provided with a console (2), **characterised in that** said vehicle (1) comprises at least one human-machine interface (10) according to any of claims 1 to 9, said base (15) being attached to said console (2).
